# EUROPEAN PATENT APPLICATION

(11) **EP 4 610 437 A1**
(43) Date of publication of application: **03.09.2025**
(21) Application number: 22963579.2
(22) Date of filing: 28.10.2022
(51) Int. Cl.: E02F 9/20, G05G 9/047, E02F 9/24, E02F 9/26, G06N 20/00

(54) **METHOD AND DEVICE FOR DETERMINING OPERATION PATTERN OF EXCAVATOR USING TRAINING INFORMATION**

(71) Applicant: Volvo Construction Equipment AB, 631 85 Eskilstuna (SE)
(72) Inventor: KIM, Byeong Soo, Changwon-si Gyeongsangnam-do 51426 (KR); KIM, Ji Eun, Yangsan-si Gyeongsangnam-do 50653 (KR); YOON, Gi Jun, Changwon-si Gyeongsangnam-do 51382 (KR); HA, Bo Keun, Changwon-si Gyeongsangnam-do 51382 (KR); SUK, Ok Jin, Daejeon 34378 (KR)
(74) Representative: Kransell & Wennborg KB
(86) International application number: PCT/KR2022/016630
(87) International publication number: WO 2024/090618

(57) **Abstract**

Disclosed are a method for determining the operation pattern of an excavator using training information, a device for performing the method, and a recording medium. According to an embodiment, the method for determining the operation pattern of an excavator using training information comprises the steps of: acquiring, over time, excavator control signals including joystick control signals for controlling an excavator; acquiring first training information for determining the operation pattern of the excavator on the basis of a first excavator control signal, corresponding to a first time period among the excavator control signals acquired over time; determining a second time period partially overlapping with the first time period and acquired by sliding the first time period by a unit time; acquiring second training information for determining the operation pattern of the excavator on the basis of a second excavator control signal corresponding to a second time period, among the excavator control signals; and determining the operation pattern on the basis of the first training information and the second training information.

## Description

### FIELD OF THE INVENTION

The technical field of the present disclosure relates to a method and device for determining an operation pattern of an excavator using training information, and is related to a technical field that promotes user convenience by more easily acquiring training information and determining an operation pattern of an excavator.

### BACKGROUND OF THE INVENTION

In the past, because training was performed based on training information acquired simply in proportion to the analysis time, there was a problem in that it was difficult to secure a sufficient amount of training information. In particular, a specific method of analyzing the unique control information of the excavator was required in order to acquire training information about the excavator's movements and provide analysis results about the movements.

In the case of excavators, there is a specificity in that limited operation patterns may exist, and a training method or analysis method of operation patterns that reflects this specificity has been required, but a specific method has not yet been proposed.

In addition, there was a problem in that it was difficult to secure a sufficient amount of training information when considering the operation cycle of the excavator.

Accordingly, a specific method is required to determine the operation pattern for the movement while easily performing the training about the movement of an excavator.

### DESCRIPTION OF THE INVENTION

### Technical Problems

The present disclosure discloses a method and device for determining an operation pattern of an excavator using training information, and discloses a method for securing training information more efficiently.

The problems to be solved in the present disclosure are not limited to the problems mentioned above, and other problems not mentioned will be able to be clearly understood by those skilled in the art from the description below.

### Technical Solution

As a technical means for achieving the above-described technical problems, a method for determining an operation pattern of an excavator using training information according to a first aspect of the present disclosure may comprise: acquiring excavator control signals including a joystick control signal for controlling an excavator over time; acquiring a first training information for determining an operation pattern of the excavator based on a first excavator control signal corresponding to a first time period among the excavator control signals acquired over time; determining a second time period acquired by sliding by a unit time in the first time period and partially overlapping with the first time period; acquiring a second training information for determining the operation pattern of the excavator based on a second excavator control signal corresponding to the second time period among the excavator control signals; and determining the operation pattern based on the first training information and the second training information.

In addition, the excavator control signals may include signals for seven joystick pilot pressures and signals for two pump pressures.

Furthermore, the first time period or the second time period may be more than or equal to twice the digging and dumping cycle time of the excavator.

Additionally, the operation pattern may include at least one of digging and dumping, loading, scratching, leveling, compacting, traveling, jack-up, pull, lifting, trenching, and idling.

In addition, determining an operation pattern group based on the first training information and the second training information may further be comprised.

Furthermore, the operation pattern group may include at least one of a first group including the digging and dumping, the loading and the trenching, a second group including the scratching and the leveling, a third group including the compacting, a fourth group including the traveling and a fifth group including the idling.

Additionally, determining a main operation pattern of the excavator based on the results of performing post-processing for the determined operation patterns may further be comprised.

**In** addition, determining the main operation pattern may comprise: acquiring the determined operation pattern corresponding to a third time period; and determining the operation pattern of the highest frequency among the determined operation patterns corresponding to the third time period as the main operation pattern.

Furthermore, determining, when the main operation pattern is digging and dumping, whether trenching is included in the determined operation patterns corresponding to the third time period; and providing, when the trenching is included in the determined operation patterns, a message indicating that there was an operation pattern of the trenching; may further be comprised.

Additionally, the third time period is longer than the first time period, and the main operation pattern can be determined based on the operation pattern of the highest frequency that is updated through sliding of the third time period.

In addition, determining the main operation pattern comprises: monitoring a change in the angle of an axis-bucket line acquired by connecting the main rotation axis of the boom and the bucket; and determining the main operation pattern as scratching or leveling based on whether the change in the angle of the axis-bucket line within a preset time period is equal to or greater than a preset angle; wherein the main rotation axis may be a rotation axis of the boom connected to the excavator body.

A device for determining an operation pattern of an excavator using training information according to a second aspect of the present disclosure may comprise: a receiving unit for acquiring excavator control signals including a joystick control signal for controlling an excavator over time; and a processor for acquiring a first training information for determining an operation pattern of the excavator based on a first excavator control signal corresponding to a first time period among the excavator control signals acquired over time, for determining a second time period acquired by sliding by a unit time in the first time period and partially overlapping with the first time period, for acquiring a second training information for determining the operation pattern of the excavator based on a second excavator control signal corresponding to the second time period among the excavator control signals, and for determining the operation pattern based on the first training information and the second training information.

Additionally, the operation pattern may include at least one of digging and dumping, loading, scratching, leveling, compacting, traveling, jack-up, pull, lifting, trenching, and idling.

Furthermore, the processor can determine a main operation pattern of the excavator based on the results of performing post-processing for the determined operation patterns.

In addition, the processor may acquire the determined operation patterns corresponding to the third time period, and may determine the operation pattern of the highest frequency among the determined operation patterns corresponding to the third time period as the main operation pattern.

Additionally, a third aspect of the present disclosure may provide a computer-readable recording medium having recorded thereon a program for executing the method of the first aspect on a computer.

### Effect of the Invention

According to an embodiment of the present disclosure, sufficient training information can be secured, and the operation pattern of the excavator can be determined using the secured training information.

Additionally, post-processing enables the provision of more accurate and useful information related to the operation of the excavator.

The effects of the present disclosure are not limited to the effects mentioned above, and other effects not mentioned will be able to be clearly understood by those skilled in the art from the description below.

### Brief description of the drawings

FIG. 1 is a schematic diagram illustrating an example of a configuration of a device according to one embodiment.
FIG. 2 is a flowchart for explaining how a device operates according to one embodiment.
FIG. 3 is a diagram for explaining five examples of operation patterns of an excavator according to one embodiment.
FIG. 4 is a diagram for explaining four examples of operation patterns of an excavator according to one embodiment.
FIG. 5 is a diagram for explaining three examples of operation patterns of an excavator according to one embodiment.
FIG. 6 is a diagram for explaining control signals for controlling an excavator according to one embodiment.
FIG. 7 is a diagram for explaining a method for a device to acquire training information according to one embodiment.
FIG. 8 is a diagram for explaining a method in which a device performs training using an image according to one embodiment.
FIG. 9 is a diagram for explaining an example in which a device determines a main operation pattern according to one embodiment.
FIG. 10 is a diagram for explaining an example in which a device performs post-processing according to one embodiment.
FIG. 11 is a diagram for explaining an example in which a device determines a main operation pattern as scratching or leveling according to one embodiment.

### Forms for implementing the invention

Advantages and features of the present disclosure, and methods for achieving them will become apparent with reference to the embodiments described below in detail along with the accompanying drawings. However, the present disclosure is not limited to the embodiments disclosed below and may be implemented in various different forms, and the present embodiments are merely provided to make the disclosure complete and fully inform those skilled in the art of the scope of the present disclosure.

The terms used herein are for describing embodiments and are not intended to limit the present disclosure. In this specification, singular forms also include plural forms unless specifically stated otherwise in the context. The terms "comprises" and/or "comprising" as used in the specification do not exclude the presence or addition of one or more other components other than the components mentioned. Same reference numerals refer to the same components throughout the specification, and "and/or" includes each and every combination of one or more of the mentioned components. Although "first", "second", and the like, are used to describe various components, these components are of course not limited by these terms. These terms are merely used to distinguish one component from another. Therefore, it goes without saying that a first component mentioned below may also be a second component within the technical concept of the present disclosure.

Unless otherwise defined, all terms (including technical and scientific terms) used in this specification may be used with meanings commonly understood by those skilled in the art. Additionally, terms defined in commonly used dictionaries are not to be interpreted ideally or excessively unless explicitly and specifically defined otherwise.

Spatially relative terms such as "below," "beneath," "lower," "above," and "upper" and the like, may be used to easily describe the relationship of one component to other components as illustrated in the drawings. Spatially relative terms should be understood as terms that include different orientations of components when in use or operation in addition to the orientations shown in the drawings. For example, when a component shown in a drawing is flipped, a component described as "below" or "beneath" another component may be placed "above" the other component. Thus, the illustrative term "below" may include both downward and upward directions. Components may also be oriented in different directions, and thus spatially relative terms can be interpreted according to their orientations.

Hereinafter, various embodiments will be described in detail with reference to the drawings.

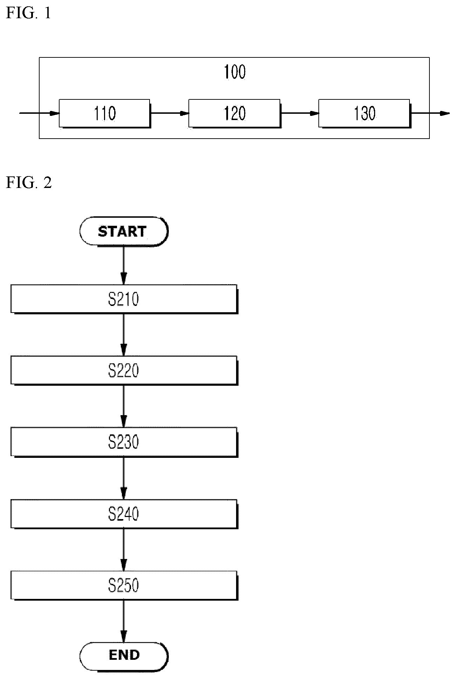

FIG. 1 is a schematic diagram illustrating an example of a configuration of a device 100 according to one embodiment.

Referring to FIG. 1, the device 100 may include a receiving unit 110, a processor 120, and an output unit 130. However, not all of the components illustrated in FIG. 1 are essential components of the device 100. The device 100 may be implemented with more components than those shown in FIG. 1, or the device 100 may be implemented with fewer components than those shown in FIG. 1.

For example, the device 100 according to one embodiment may further include memory (not shown). As another example, the output unit 130 according to one embodiment may include a display (not shown).

The device 100 according to one embodiment represents a computing device capable of determining a operation pattern or a group of operation patterns of an excavator, and in one embodiment, may be implemented as a desktop PC, tablet, laptop, and the like, or may be implemented as a computing device such as a smartphone. The device 100 according to one embodiment may be included inside the excavator or may be located outside the excavator, such as on a server.

According to one embodiment, the receiving unit 110 acquires excavator control signals including a joystick control signal for controlling the excavator over time.

Excavator control signals according to one embodiment may include at least one of a joystick control signal and a signal for pump pressures.

The processor 120 according to one embodiment acquires a first training information for determining an operation pattern of an excavator based on a first excavator control signal corresponding to a first time period among excavator control signals acquired over time.

The processor 120 according to one embodiment determines a second time period acquired by sliding by a unit time in the first time period and partially overlapping with the first time period. The unit time according to one embodiment may be predetermined, but may also be determined depending on the situation.

The processor 120 according to one embodiment acquires a second training information for determining an operation pattern of an excavator based on a second excavator control signal corresponding to a second time period among excavator control signals. The first or second time period can be determined in various ways. For example, the first time period or the second time period can be determined as equal to or more than twice the digging and dumping cycle time of the excavator.

The processor 120 according to one embodiment determines a operation pattern based on first training information and second training information. The device 100 may perform training using both the first training information and the second training information. Additionally, the device 100 can determine an operation pattern of the excavator or a group of operation patterns of the excavator according to excavator control signals based on information acquired by performing training.

For a more specific operation method of the device 100, refer to the contents of FIG. 2 and below.

FIG. 2 is a flowchart for explaining how a device 100 operates according to one embodiment.

Referring to step S210, the device 100 according to one embodiment acquires excavator control signals including a joystick control signal for controlling the excavator over time.

Excavator control signals according to one embodiment may include at least one of a joystick control signal and a signal for pump pressures. In addition, excavator control signals may include at least one of signals for seven joystick pilot pressures and signals for two pump pressures.

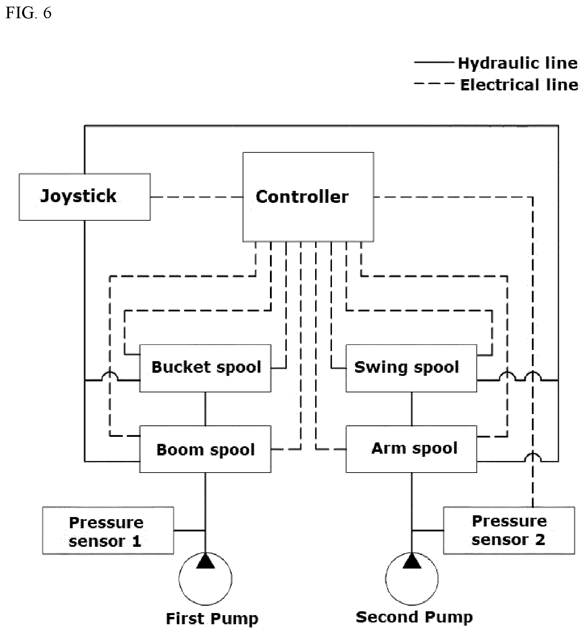

For more specific excavator control signals, joystick control signals, signals for pump pressures, and the like, are described later in FIG. 6.

Referring to step S220, the device 100 according to one embodiment acquires a first training information for determining an operation pattern of an excavator based on a first excavator control signal corresponding to a first time period among excavator control signals acquired over time.

Operation pattern of the excavator according to one embodiment may include at least one of digging and dumping, loading, scratching, leveling, compacting, traveling, jack-up, pull, lifting, trenching, and idling, but is not limited thereto. Idling according to one embodiment may represent, but is not limited to, no-load slow operation.

Referring to step S230, the device 100 according to one embodiment determines a second time period acquired by sliding by a unit time in a first time period and partially overlapping with the first time period.

The unit time according to one embodiment may be predetermined, but may also be determined depending on the situation. For example, the device 100 may determine the unit time in a case where the entire training information is insufficient to be shorter than the unit time in a case where the entire training information is sufficient. As an example, the unit time may be determined as the time more or less 1 second, but is not limited thereto.

Referring to step S240, the device 100 according to one embodiment acquires a second training information for determining an operation pattern of the excavator based on a second excavator control signal corresponding to a second time period among the excavator control signals.

The first or second time period can be determined in various ways. For example, the first time period or the second time period can be determined as equal to or more than twice the digging and dumping cycle time of the excavator. For example, if the digging and dumping cycle time is 12 seconds, the first time period or the second time period may be determined to be 24 seconds or longer, but is not limited thereto. The first time period and second time period may be the same or different.

Referring to step S250, the device 100 according to one embodiment determines an operation pattern based on the first training information and the second training information. The device 100 may perform training using both the first training information and the second training information. Additionally, the device 100 can determine an operation pattern of the excavator or a group of operation patterns of the excavator according to excavator control signals based on information acquired by performing training.

According to one embodiment, a group of operation patterns can include, but is not limited to, at least one of a first group including digging and dumping, loading and trenching, a second group including scratching and leveling, a third group including compacting, a fourth group including traveling, and a fifth group including idling. A group of operation patterns can be determined by grouping operation patterns that perform similar movements into one group.

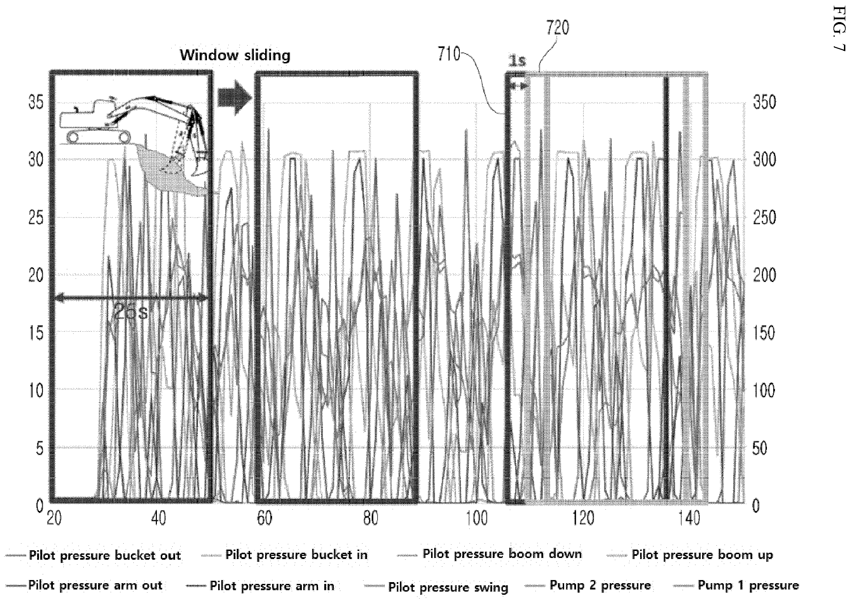

Additional embodiments of acquiring training information over time periods and utilizing the same are described later in FIG. 7.

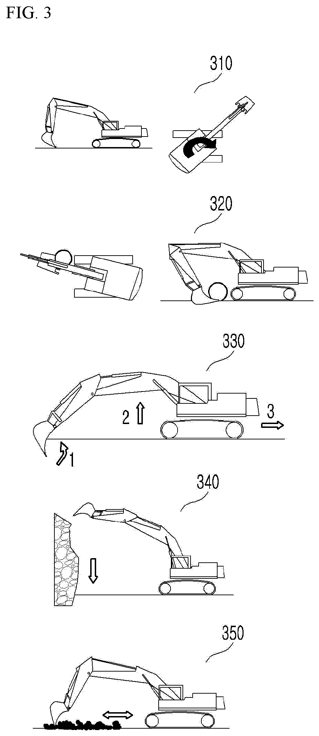

FIG. 3 is a diagram for explaining five examples of operation patterns of an excavator according to one embodiment.

The operation pattern of the excavator according to one embodiment may include, but is not limited to, at least one of digging and dumping 310, loading 320, trenching 330, scratching 340, and leveling 350.

The group of operation patterns according to one embodiment may include, but is not limited to, at least one of a first group including digging and dumping 310, loading 320 and trenching 330, and a second group including scratching 340 and leveling 350.

The group of operation patterns according to one embodiment may be determined based on similarity between the operation patterns.

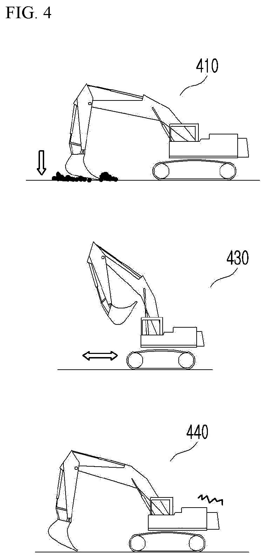

FIG. 4 is a diagram for explaining four examples of operation patterns of an excavator according to one embodiment.

The operation pattern of the excavator according to one embodiment may include, but is not limited to, at least one of compacting 410, traveling 430 and idling 440.

The group of operation patterns according to one embodiment may include, but is not limited to, at least one of a third group including compacting 410, a fourth group including traveling 430, and a fifth group including idling 440.

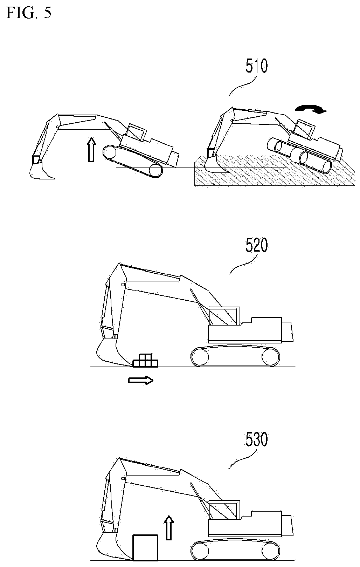

FIG. 5 is a diagram for explaining three examples of operation patterns of an excavator according to one embodiment.

The operation pattern of the excavator according to one embodiment may include, but is not limited to, at least one of jack-up 510, pull 520, and lifting 530.

According to one embodiment, among the operation patterns, operation patterns such as jack-up 510 and pull 520 may be classified as not being main tasks.

FIG. 6 is a diagram for explaining control signals for controlling an excavator according to one embodiment.

Excavator control signals according to one embodiment may include at least one of a joystick control signal and a signal for pump pressures. In addition, excavator control signals may include at least one of signals for seven joystick pilot pressures and signals for two pump pressures. The pressure according to one embodiment may be converted into another form (e.g., an electrical signal) and used. The device 100 can acquire a signal (e.g., an electrical signal) representing a pressure. According to one embodiment, the signal for the joystick pilot pressure may be implemented as an electrical signal, and the signal for the pump pressure may also be implemented as an electrical signal.

According to one embodiment, the joystick for controlling the excavator can be implemented in various types.

For example, the joystick may be a hydraulic joystick. A hydraulic joystick can acquire signals using a pilot pressure. When a hydraulic joystick is used, a pilot pressure is applied directly without going through the processor 120 when controlling the excavator, allowing the spool to move.

As another example, the joystick may be an electric joystick. An electric joystick can convert the movements of the joystick into electrical signals. When an electric joystick is used, an electric signal acquired according to the control of the joystick is applied to the processor 120, and the processor 120 can transmit the electric signal to the PPRV (Proportional Pressure Reducing Valve) corresponding to each spool. Additionally, the spool can move according to the hydraulic pressure generated by the transmitted electric signal.

Further, even with a hydraulic joystick, the signal acquired through the pilot pressure can be converted into an electrical signal and used.

A joystick control signal according to one embodiment may include a signal for at least one of Boom up, Boom down, Arm **In,** Arm out, Bucket **In,** Bucket out, and Swing. Additionally, the signal for pump pressure may include a signal for at least one of a first pump and a second pump.

The device 100 according to one embodiment can acquire excavator control signals over time. For example, a boom up signal can be updated over time, and the device 100 can acquire the boom up signal that is updated over time. An example of excavator control signals acquired while being updated over time is described below with reference to FIG. 7.

FIG. 7 is a diagram for explaining a method for a device 100 to acquire training information according to one embodiment.

The device 100 according to one embodiment can acquire excavator control signals over time. Referring to FIG. 7, the device 100 can acquire a boom up signal, a boom down signal, an arm in signal, an arm out signal, a bucket in signal, a bucket out signal, a swing signal, a first pump signal, and a second pump signal over time.

According to one embodiment, the horizontal axis of FIG. 7 may represent time and the vertical axis may represent the size of a signal. For example, the vertical axis of FIG. 7 can represent joystick signals (boom up signal, boom down signal, arm in signal, arm out signal, bucket in signal, bucket out signal, swing signal) and pump signals (first pump signal and second pump signal) on different scales.

The device 100 according to one embodiment acquires a first training information for determining an operation pattern of an excavator based on a first excavator control signal corresponding to a first time period 710 among excavator control signals acquired over time. According to one embodiment, the first training information may include various information used for training. For example, the first training information may include the results of a comparison between excavator control signals acquired during the first time period 710 and reference signals for expected excavator operation patterns.

The device 100 according to one embodiment determines a second time period 720 acquired by sliding by a unit time in a first time period 710 and partially overlapping with the first time period 710.

According to one embodiment, the device 100 can determine the second time period 720 by sliding by a unit time in the first time period 710. The second time period 720 may partially overlap with the first time period 710. For example, when the length of the first time period 710 is 25 seconds and the unit time is 1 second, the first time period 710 and the second time period 720 may overlap by 24 seconds.

The unit time according to one embodiment may be predetermined, but may also be determined depending on the situation. For example, the device 100 may determine a first unit time which is the unit time when the entire training information is insufficient to be shorter than a second unit time which is the unit time when the entire training information is sufficient.

The device 100 according to one embodiment acquires a second training information for determining an operation pattern of the excavator based on a second excavator control signal corresponding to a second time period 720 among the excavator control signals. According to one embodiment, the second training information may include various information used for training. For example, the second training information may include the results of a comparison between excavator control signals acquired during the second time period 720 and reference signals for expected excavator operation patterns.

The device 100 according to one embodiment determines an operation pattern based on the first training information and the second training information.

The device 100 according to one embodiment can determine an operation pattern of the excavator or a group of operation patterns of the excavator by using both the first excavator control signal and/or the second excavator control signal. The device 100 can determine an operation pattern of the excavator or a group of operation patterns of the excavator through analysis of the first excavator control signal acquired during the first time period 710. The device 100 can determine an operation pattern of the excavator or a group of operation patterns of the excavator through analysis of the second excavator control signal acquired during the second time period 720.

The device 100 according to one embodiment can determine a operation pattern of the excavator or a group of operation patterns of the excavator by using both the first training information and the second training information. The amount of training information acquired by allowing overlapping time periods may be greater than the amount of training information acquired without overlapping time periods. For example, when the first time period 710 and the second time period 720 are each 25 seconds and the unit time is 1 second, the device 100 can acquire the first training information and the second training information for a time period of 26 seconds. When acquiring training information without overlapping time periods, the device 100 can acquire only the first training information for 25 seconds.

This paragraph explains the case where the time period is 25 seconds and the unit time is 1 second. If an overlapping is allowed, training information can be acquired 25 times in 50 seconds. If an overlapping is not allowed, training information can be acquired twice in 50 seconds. Thus,

In the case where there is no overlap in time periods, the amount of training information acquired for one cycle may be greater than the amount of training information acquired for one cycle when overlap of time periods is allowed. However, when comparing the total amount of training information, the amount of training information acquired by allowing overlap of time periods may be greater than the amount of training information acquired without overlap of time periods.

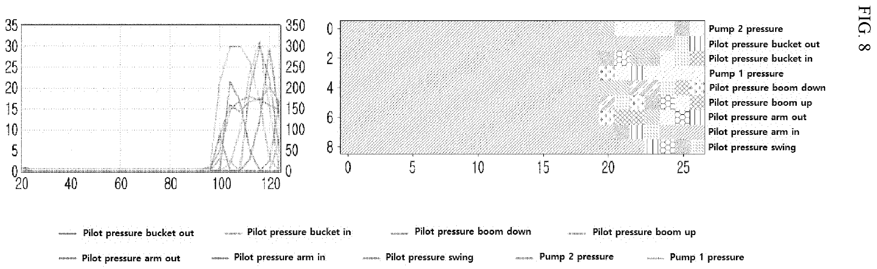

FIG. 8 is a diagram for explaining a method in which a device 100 performs training using an image according to one embodiment.

**In** addition, excavator control signals may include at least one of signals for seven joystick pilot pressures (or joystick electric signals) and signals for two pump pressures. Once the excavator control signals are acquired, the device can convert them into images to learn (or train) the excavator control signals using a CNN. **In** this process, the device 100 can perform 1) a down sampling step and 2) a normalization-scale step.

**In** a down sampling step according to one embodiment, the device 100 can reduce the sampling rate of the excavator control signals. For example, the sampling rate of excavator control signals from 100 Hz can be reduced to 1 Hz. This is because model training can also introduce noise and affect accuracy. According to one embodiment, down sampling may be performed using an average value. For example, down sampling can be performed by dividing the sum of 100 data by 100.

In a normalization-scale step according to one embodiment, the device 100 can perform normalization for scale with preset bits (e.g., 8 bits 256).

According to one embodiment, the device 100 can convert excavator control signals into images for using CNN. For example, 0 may correspond to black and 255 may correspond to white, and each signal may correspond to any one value between 0 and 255. Referring to FIG. 8, you can see an example of converting the graph on the left into the image on the right. According to the example of FIG. 8, each excavator control signal may correspond to one row of the image. The nine rows may each correspond to nine control signals included in the excavator control signals. An example of the nine control signals may include seven joystick control signals (boom up, boom down, arm in, arm out, bucket in, bucket out, and swing) and signals for pump pressures (first pump signal and second pump signal). In this case, one column can contain nine signals corresponding to the same time. Also, one row can contain one type of signal.

The device 100 according to one embodiment can acquire training information by converting excavator control signals into images and performing training (e.g., CNN) on the converted images.

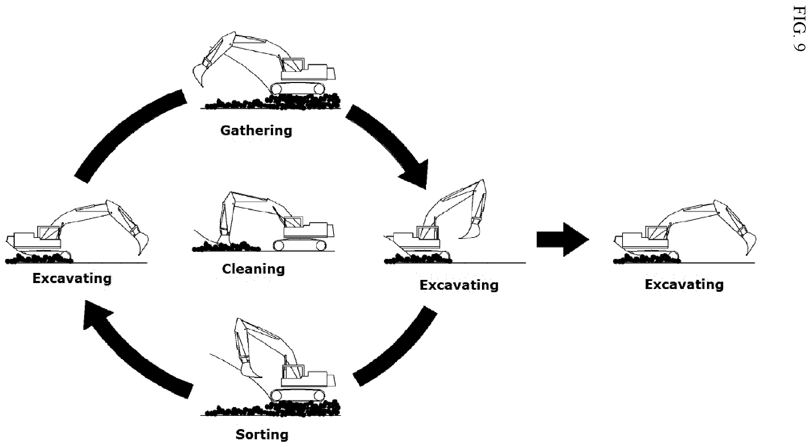

FIG. 9 is a diagram for explaining an example in which a device 100 determines a main operation pattern according to one embodiment.

Referring to FIG. 9, the device 100 can acquire information about an excavator performing various operations such as gathering, cleaning, excavating, and sorting. The device 100 acquires information on such various operations, but may determine a main operation pattern by analyzing the acquired information. Referring to FIG. 9, it can be seen that the main operation pattern is determined as excavating. The device 100 can determine what the main operation pattern is by performing post-processing and ignoring operation patterns other than the main operation pattern (e.g., sub-operation patterns).

According to one embodiment, the excavator may perform gathering, cleaning, sorting, and the like, during the process of performing the excavating. When the device 100 distinguishes between excavating, gathering, cleaning, and sorting as separate patterns, accuracy may be lowered and the utility of the information provided may be reduced. Accordingly, the device 100 can analyze information acquired during a certain period of task time (e.g., 300 seconds) and determine a main operation pattern (e.g., excavating) through post-processing.

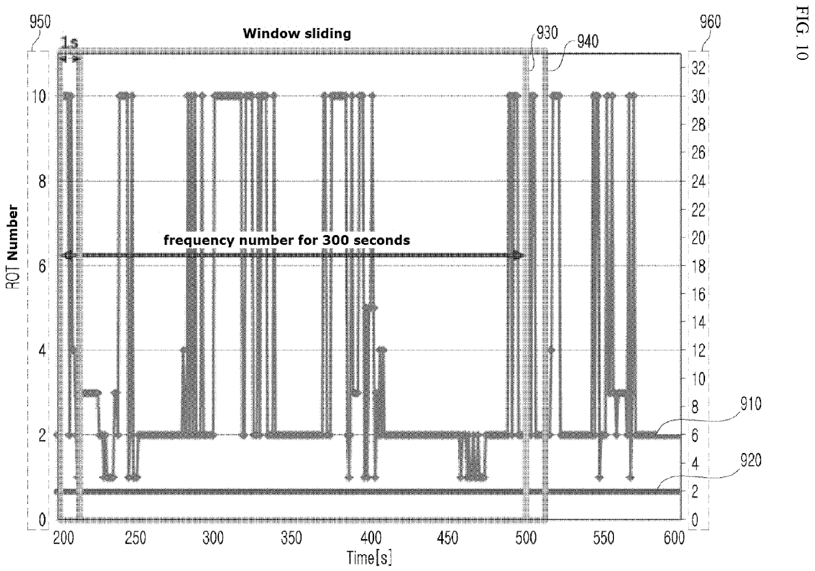

FIG. 10 is a diagram for explaining an example in which a device 100 performs post-processing according to one embodiment.

The device 100 according to one embodiment can determine a main operation pattern of an excavator based on results of performing post-processing for determined operation patterns. Specifically, the device 100 may acquire determined operation patterns corresponding to a third time period, and determine the operation pattern with the highest frequency among the determined operation patterns corresponding to the third time period as a main operation pattern.

According to one embodiment, the third time period may be longer than the first time period or second time period described above. The third time period may be significantly longer than the first time period, for example, if the first time period is 25 seconds, the third time period can be 300 seconds.

The third time period according to one embodiment may be determined as a time period during which the same operation pattern is expected to be maintained. For example, the third time period may be determined to be around 300 seconds, but is not limited thereto.

Referring to FIG. 10, one can see a first graph 910 acquired according to an actual prediction and a second graph 920 acquired according to a post-processing prediction.

The first graph 910 may represent an operation pattern determined based on a prediction performed without post-processing. For example, the first graph 910 may represent an operation pattern acquired in real time according to a prediction performed according to the method of FIGs. 1 to 8 described above.

The second graph 920 may represent an operation pattern acquired based on the results of post-processing. Post-processing can be performed based on the results of performing actual predictions acquired over a preset period of time (e.g., the third time period). For example, the main operation pattern can be determined based on the operation pattern with highest frequency that is updated through sliding of the third time period. The main operation pattern may mean the operation pattern shown in the second graph 920. The 3-1 time period 930 and the 3-2 time period 940 may be an example of the third time period. According to one embodiment, the left scale 950 may represent a scale for the first graph 910, and the right scale 960 may represent a scale for the second graph 920.

As a specific example, the device 100 may determine a second pattern, which is the operation pattern with the highest frequency, as the main operation pattern based on the results of the first graph 910 acquired during the 3-1 time period 930 or the 3-2 time period 940. Since the second pattern is most frequently recognized in the first graph 910 during the 3-1 time period 930, the value of the second graph 920 corresponding to the 3-1 time period 930 can be determined as the second pattern.

According to one embodiment, the device 100, when the main operation pattern is digging and dumping, may determine whether trenching is included in the determined operation patterns corresponding to the third time period. Additionally, the device 100, when the determined operation patterns include trenching, may provide a message indicating that there was an operation pattern of trenching.

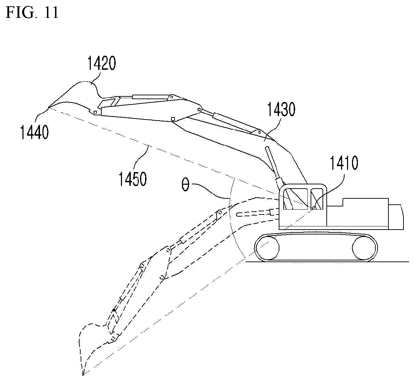

FIG. 11 is a diagram for explaining an example in which a device 100 determines a main operation pattern as scratching or leveling according to one embodiment.

The device 100 according to one embodiment may monitor a change in an angle of an axis-bucket line 1460 acquired by connecting a main rotation axis 1410 of a boom 1430 and a bucket 1420. For example, the axis-bucket line 1450 may be, but is not limited to, a line connecting the end point 1440 of the bucket 1420. Specifically, the device 100 may monitor a change in an angle of the axis-bucket line 1460 by acquiring angular acceleration using an IMU (Inertia Measurement Unit) located on a boom, arm, bucket, or the like.

Additionally, the main rotation axis 1410 may include a rotation axis of a boom 1430 connected to the excavator body. The angle of the axis-bucket line 1460 may refer to the angle between a reference line (e.g., the ground) and the axis-bucket line 1460.

The device 100 according to one embodiment may determine a main operation pattern as scratching or leveling based on whether the change in angle of the axis-bucket line within a preset time period is greater than or equal to a preset angle. For example, the device 100 may determine the main operation pattern based on the maximum angle difference, which is the difference between the maximum angle and the minimum angle of the axis-bucket line 1460 during a preset time period (e.g., 20 seconds, 23 seconds, 25 seconds, 30 seconds, 40 seconds, or the like). The device 100 may determine the main operation pattern as scratching when the maximum angle difference is greater than or equal to a preset angle (e.g., 20 degrees, 25 degrees, 30 degrees, 35 degrees, or the like), and may determine the main operation pattern as leveling (or grading) when the maximum angle difference is less than the preset angle.

Various embodiments of the present disclosure may be implemented as software including one or more instructions stored in a storage medium (e.g., a memory) readable by a machine (e.g., a display device or a computer). For example, a processor of the machine (e.g., processor 120) may call at least one instruction from one or more instructions stored from a storage medium and execute it. This enables the machine to be operated to perform at least one function in accordance with at least one instruction called as above. The one or more instructions may include codes generated by a compiler or codes executable by an interpreter. The machine-readable storage medium may be provided in the form of a non-transitory storage medium. Here, 'non-transitory' simply means that the storage medium is a tangible device and does not contain signals (e.g. electromagnetic waves), and the term does not distinguish between cases where data is stored semi-permanently or temporarily on the storage medium.

According to one embodiment, the methods according to various embodiments disclosed in the present disclosure may be provided as included in a computer program product. Computer program products may be traded between sellers and buyers as commodities. The computer program product may be distributed in the form of a machine-readable storage medium (e.g., a compact disc read only memory (CD-ROM)), or may be distributed (e.g., downloaded or uploaded) online directly via an application store (e.g., Play StoreTM) or between two user devices (e.g., smartphones). In the case of online distribution, at least a portion of the computer program product may be temporarily stored or temporarily created in a machine-readable storage medium, such as the memory of a manufacturer's server, an application store's server, or an intermediary server.

Those skilled in the art related to the present embodiment will understand that the above-described description can be implemented in a modified form without departing from its essential characteristics. Therefore, the disclosed methods should be considered in view of an explanatory rather than a restrictive perspective. The scope of the present invention is indicated in the claims rather than the foregoing description, and all differences within the scope equivalent thereto should be construed as being included in the present invention.

## Claims

1. A method for determining an operation pattern of an excavator using training information, comprising:
acquiring excavator control signals including a joystick control signal for controlling an excavator over time;
acquiring first training information for determining an operation pattern of the excavator based on a first excavator control signal corresponding to a first time period among the excavator control signals acquired over time;
determining a second time period acquired by sliding by a unit time in the first time period and partially overlapping with the first time period;
acquiring second training information for determining the operation pattern of the excavator based on a second excavator control signal corresponding to the second time period among the excavator control signals; and
determining the operation pattern based on the first training information and the second training information.

2. The method of claim 1, further comprising
wherein the excavator control signals comprise signals for seven joystick pilot pressures and signals for two pump pressures.

3. The method of claim 1, further comprising
wherein the first time period or the second time period is at least twice the digging and dumping cycle time of the excavator.

4. The method of claim 1, further comprising
wherein the operation pattern comprises at least one of digging and dumping, loading, scratching, leveling, compacting, traveling, jack-up, pull, lifting, trenching, and idling.

5. The method of claim 4, further comprising
determining a group of operation patterns based on the first training information and the second training information.

6. The method of claim 5,
wherein the group of operation patterns comprises
at least one of a first group including the digging and dumping, the loading and the trenching, a second group including the scratching and the leveling, a third group including the compacting, a fourth group including the traveling and a fifth group including the idling.

7. The method of claim 1, further comprising
determining a main operation pattern of the excavator based on a result of performing post-processing for the determined operation patterns.

8. The method of claim 7,
wherein determining the main operation pattern comprises
acquiring the determined operation patterns corresponding to a third time period; and
determining an operation pattern with the highest frequency among the determined operation patterns corresponding to the third time period as the main operation pattern.

9. The method of claim 8,
determining, when the main operation pattern is digging and dumping, whether trenching is included in the determined operation patterns corresponding to the third time period; and
providing, when the determined operation patterns include trenching, a message indicating that there was an operation pattern of trenching.

10. The method of claim 8,
wherein the third time period is longer than the first time period, and
wherein the main operation pattern is determined based on the operation pattern with the highest frequency updated through sliding of the third time period.

11. The method of claim 7,
wherein determining the main operation pattern comprises
monitoring a change in an angle of an axis-bucket line acquired by connecting a main rotation axis of a boom and a bucket; and
determining the main operation pattern as scratching or leveling based on whether the change in the angle of the axis-bucket line within a preset time period is greater than or equal to a preset angle; and,
wherein the main rotation axis is a rotation axis of the boom connected to the excavator body.

12. A device for determining an operation pattern of an excavator using training information, comprising:
a receiving unit for acquiring excavator control signals including a joystick control signal for controlling an excavator over time; and
a processor for: acquiring first training information for determining an operation pattern of the excavator based on a first excavator control signal corresponding to a first time period among the excavator control signals acquired over time,
determining a second time period acquired by sliding by a unit time in the first time period and partially overlapping with the first time period,
acquiring second training information for determining the operation pattern of the excavator based on a second excavator control signal corresponding to the second time period among the excavator control signals, and
determining the operation pattern based on the first training information and the second training information.

13. The device of claim 12,
wherein the operation pattern comprises at least one of digging and dumping, loading, scratching, leveling, compacting, traveling, jack-up, pull, lifting, trenching, and idling.

14. The device of claim 12,
wherein the processor
determines a main operation pattern of the excavator based on a result of performing post-processing for the determined operation patterns.

15. The device of claim 14,
wherein the processor
acquires the determined operation patterns corresponding to the third time period, and
determines an operation pattern with the highest frequency among the determined operation patterns corresponding to the third time period as the main operation pattern.

16. A computer program stored on a recording medium for implementing any one of the methods of claims 1 to 11.
